# EUROPEAN PATENT SPECIFICATION

(11) **EP 0 327 246 B1**
(45) Date of publication and mention of the grant of the patent: **05.10.1994**
(21) Application number: 89300674.2
(22) Date of filing: 25.01.1989
(51) Int. Cl.: C08K 9/10, C08F 2/44, C08F 10/00

(54) **In-reactor stabilization of polyolefins via coated stabilizers**
Stabilisierung von Polyolefinen im Reaktor über beschichtete Stabilisatoren
Stabilisation de polyoléfines dans un réacteur par des stabilisateurs enrobés

(30) Priority: 25.01.1988 US 147953
(43) Date of publication of application: 09.08.1989
(73) Proprietor: SHELL OIL COMPANY, Houston Texas 77002 (US)
(72) Inventor: Chatterjee, Ananda M., Houston Texas 77077 (US)
(74) Representative: Cresswell, Thomas Anthony

(56) References cited:
- EP-A- 0 005 514
- GB-A- 797 344
- GB-A- 1 056 507
- US-A- 3 591 409

## Description

This invention relates to the preparation of coated additives for a variety of uses including: (a) addition to a polymerization reactor, to produce non-extruded product which contains stabilizer, and (b) preparation of concentrates or masterbatches of additives or pigments via a non-extrusion route. It also relates to a process for incorporating the additives thus prepared into polyolefins during olefin polymerization.

Prior art methods for incorporating dry additives into polymers have involved polymerizing a monomer, and then adding stabilizers to the resulting polymer by extrusion or other melt mixing techniques, thereby producing pellets. Stabilizers have traditionally not been added directly to the polymerization reactor because neat stabilizers often deactivate the polymerization catalyst and terminate the polymerization reaction. Various disadvantages are associated with such melt mixing techniques, including an appreciable downtime for cleaning of the blending equipment, heat sensitivity of some additives, and pelletization problems, particularly with very high melt flow > 0.166g/sec (> 100 g/10 min) polypropylene resins.

Amongst prior disclosures of methods of blending additives with polymers, US-A-3,591,409 describes preparing a composition by high intensity blending of a mixture of particulate thermoplastic resin, hydrocarbon wax, and particulate solid additive at high temperatures. This method requires that all ingredients be placed in the mixer at once, without the separate pretreatment of any one of the components of the mixture. US-A-4,659,506 discloses the preparation of a granular stabiliser for chlorine-containing polymers comprising a stabilizer in powder form and a surface treatment of an organic solid binder or a dispersion medium. WO 87/00543 discloses additive particles which, having an overall size of 100-3000 microns, are aggregates of individually wax-coated particles of much smaller dimensions.

A variety of patents teach methods for making discrete particles or capsules containing different kinds of fill materials. US-A-4,306,993 discloses a method for making microcapsules which can be used to tag books, paper currency and explosives and explosive devices. DE-A-2,160,852 discloses microcapsules containing wetting agents, and US-A-4,224,422 discloses a curable epoxy resin polyisocyanate system useful as an adhesive. The curable one part system comprises a rupturable impermeable microcapsule having shell walls of a crosslinked interfacial polyurethane-polyether reaction product of an aromatic polyisocyanate. US-A-4,382,326 describes acrylate copolymer microsphere structures using glycerol and cycloaliphatic polyepoxides filled with a liquid Lewis acid-glycerol complex. Tacky spherical acrylate copolymer particles are disclosed in US-A-4,098,945, which teaches a liquid-filled capsule having a microporous capsule wall made of a dispersed solid-phase and a continuous phase. Here the capsule forms a single phase in the liquid state but separate phases when cooled to a solid and the volume contraction ratio is at least 1.2:1. The preferred capsules are spherical and the wall is made of the solid, crystalline olefin polymer, an amorphous hydrocarbon resin and an at least partially crystalline wax capable of separating out as a discontinuous mass.

Liquid-filled capsules for the controlled release of fertilizers having a microporous wall of crystalline polyolefin, hydrocarbon resin and a wax are disclosed in US-A-4,002,458. US-A-3,985,840 describes microspheres prepared by forming a homogeneous molten liquid phase using a solid crystalline olefinic polymer, a hydrocarbon resin and at least partially crystalline wax, and wherein the liquid phase is allowed to cool and the wax separates out as a discontinuous mass dispersed throughout the matrix. US-A-3,977,992 discloses a controlled release capsule prepared from 2% wax, 5% hydrocarbon resin and the remainder of crystalline olefinic polymer such as polyethylene.

It has long been desired to find a method of cheaply blending stabilizers, antioxidants and other additives into polymers in a reactor without compounding or extruding, in such a way that these additives are dispersed throughout the polymer. It has also been desired to achieve a method of blending additives into polymers without requiring the use of solvents. The present invention seeks to achieve these goals by providing a process for preparing coated additive particles that can act as an antioxidant and/or a stabiliser when incorporated into a polymer matrix and which can be thus incorporated during polymerisation at short notice and with good efficiency.

Accordingly, the present invention provides a process for producing a coated additive particle suitable for use in an olefin polymerisation reaction, which particle comprises a core comprising at least one antioxidant for a polyolefin; and a coating comprising at least one wax which is solid at the polymerisation temperature and which comprises a polyolefin wax selected from polypropylene wax, polybutylene wax, polyethylene wax and a mixture of at least two of these, the process comprising melting a said wax, fluidizing with a hot gas particles of said antioxidant, spraying the molten wax on the heated fluidized antioxidant particles, and maintaining the fluidized antioxidant particles at a temperature such that the formation of fibres is prevented and discrete coated additive particles are formed; and, optionally, repeating these steps to dispose a second coating on the particle.

The invention further provides a process for providing in-reactor stabilisation of a polyolefin during a polymerisation reaction which comprises polymerizing the olefin in the presence of coated additive particles produced as hereinbefore described and a polymerization catalyst.

The coated additive particles prepared by the process of the present invention comprise a core of at least one antioxidant and a coating of wax which is solid at the polymerization temperature and which comprises a polyolefin wax selected from polypropylene wax, polybutylene wax, polyethylene wax and a mixture of at least two of these. In one embodiment of the process, the wax coating of the particles prepared represents from 15% to 85% of the total weight of the particle, the percentages being based on the total composition of the particle.

The coated additive particles produced typically have diameters from 100 to 8000 µm. The antioxidant used is suitably selected from 1,3,5-trimethyl-2,4,6-tris(3,5-di-tert-butyl-4-hydroxybenzyl)benzene (A); octadecyl 3-(3',5'-di-tert-butyl-4'-hydroxyphenyl)propionate (B), tetrakis[methylene (3,5-di-tert-butyl-4-hydroxyhydrocinnamate)] methane (C); tris[3,5-di-t-butyl-4-hydroxybenzyl)isocyanurate (D); 3,5-di-tert-butyl-4-hydroxyhydrocinnamic acid triester with 1,3,5-tris(2-hydroxyethyl)-s-triazine-2,4,6(1H,3H,5H)-trione (E); (1,3,5-tris(4-tert-butyl-3-hydroxy-2,6-dimethylbenzyl) 1,3,5-triazine-2,4,6-(1H,3H,5H)-trione (F); bis-[3,3-bis(4'hydroxy-3'tert-butyl-phenyl)-butanoic acid]glycolester (G); 2,2'-methylene-bis-(4-methyl-6-tertiary-butyl-phenol)-terephthalate (H); 2,2-bis[4-(2-(3,5-di-tert-butyl-4-hydroxy- hydrocinnamoyloxy)ethoxy-phenyl]propane (I), calcium bis-[monoethyl(3,5-di-tert-butyl-4-hydroxy-benzyl)phosphonate](J); 1,2-bis(3,5-di-tert-butyl-4-hydroxy-hydrocinnamoyl)hydrazine (K) and 2,2'-oxamido bis-[ethyl 3-(3,5-di-tert-butyl-4-hydroxyphenyl)propionate] (L).

Owing to their melting points, antioxidants A, D, F, G, H, J, K, and L can be coated by an isotactic propylene homopolyer wax. Antioxidants A and C to L inclusive, are suitably coated by polyethylene wax of melting point 100-105°C.

Optional additives suitable for being blended with the above antioxidants include processing stabilizers such as phosphites and phosphonites; acid acceptors such as metal stearates, metal oxides, and hydrotalcites (for example Kyowa Chemical Industries' DHT-4A and DHT-4C); nucleating agents; lubricants; antistatic agents; fillers such as barium sulfate, clay, calcium carbonate silicates and magnesium oxide; pigments such as titanium dioxide, zinc oxide, lead chromate, cadmium sulfides, cadmium selenide, zinc sulfide and basic carbonate of white lead; stabilizers such as tribasic lead sulfate, basic lead chlorosilicate, dibutyl tin oxide and other salts of lead, zinc, cadmium and tin; flame retardants such as antimony oxide; ultra-violet stabilizers, slip agents, anti-block agents, and other solid additives which enhance the properties and processability of a polyolefin to which they are added.

The coating of the additive particles comprises a wax which is suitably polypropylene wax, polyethylene wax or a mixture thereof. In producing the particles, the initial heating of the wax is suitably carried out at a temperature from 110°C to 180°C. One embodiment involves heating the fluidized antioxidant particles to be coated to a temperature from 150°C to 180°C.

In the process for providing in-reactor stabilization of a polyolefin according to the present invention, which comprises polymerizing an olefin in the presence of coated additive particles prepared as hereinbefore described and a polymerization catalyst, the coated additive particles are suitably added directly to the polymerization reactor. Polymerization with a titanium halide/aluminum alkyl catalyst system is particularly suitable. In one embodiment, the polymerization catalyst is a magnesium supported titanium halide/aluminum alkyl catalyst system comprising;
(i) a procatalyst component obtained by reacting a magnesium compound of the formula MgR'R'' wherein R' is an alkoxide or aryloxide group or a halogen, and R'' is an alkoxide, alkyl carbonate, aryloxide or halogen with a halide of tetravalent titanium and an electron donor, contacting the halogenated product with a halide of tetravalent titanium, washing it to remove unreacted titanium and electron donor, contacting the halogenated product with a halide of tetravalent titanium, washing it in an inert solvent to remove unreacted titanium compounds and recovering the solid product;
(ii) a cocatalyst component comprising an organoaluminum compound which is diethyl aluminum chloride, ethyl aluminum dichloride, ethyl aluminum sesquichloride or triethyl aluminum; and
(iii) a selectivity control agent which is diphenyldimethoxysilane, paraethoxy benzoate, ethyl paratoluate, ethyl paramethoxy benzoate, phenyltriethoxysilane or 2,2,6.6-tetramethyl piperidine.

The coated additive particle prepared according to the invention suitably comprises in its core one or more of a variety of additives, examples of which include acid acceptors, processing stabilizers, antioxidants, metal deactivating agents, nucleating agents, pigments, heat stabilizers, light stabilizers, lubricants, antiblock agents, antistatic agents, and slip additives which are capable of enhancing the properties and processability of the polyolefin. Typically, the concentration of antioxidant plus any other optional additive ranges from about 5% to about 85% of the total mass of the particle.

The present invention thus involves at least two aspects;
(1) a novel process for the preparation of a coated additive particle comprising a core of antioxidant and a coating of polyolefin wax, and
(2) the incorporation of the coated additive particles within a polymer matrix during polymerization in a reactor, wherein the particle coating acts as a barrier between the catalyst system and the antioxidant during polymerization.

Preferred waxes for the outer coating material are polypropylene and polyethylene waxes. A polypropylene wax with a weight average molecular weight of 10,000 to 30,000 and which is primarily isotactic (such as Hoechst Wax PP 230) is an example of a suitable coating.

Specific examples of polyolefin waxes suitable for the outer coating include both homopolymers and copolymers of ethylene, propylene and butene-1, for instance copolymers of ethylene and propylene, copolymers of propylene and butene-1, and copolymers of ethylene with at least one other alpha olefin containing from 2 to 18 carbon atoms in the repeating unit and more preferably containing from 2 to 8 carbon atoms.

The particular wax selected for the outer coating should not cause colour formation, staining or degradation of the base polymer composition in which the coated particles are to be incorporated. The wax of the outer coating should be relatively easy to incorporate into the polymer. More specifically the outer coating should not be reactive with the base polymer. If a polypropylene wax is used as the coating material, it (in low concentration) can be left in the final polypropylene composition.

The melting point of the coating wax should be at least high enough so that the outer coating remains solid at room and storage temperatures. It is preferred that the coating material soften or melt at from 100°C to 180°C for convenience of its incorporation during propylene polymerization.

Waxes and wax-like materials are suitably employed alone or in mixtures of various proportions as the coating layer. A particularly suitable outer coating comprises polypropylene. The individual components of the coating are typically melted together before being coated on the core of antioxidant. This melting usually occurs at temperatures from 150°C to 180°C. The coating can then be applied to the antioxidant core by heating and/or blending and/or spraying operation.

One or more coatings are applied to the antioxidant core by spraying or by any other suitable technique. For example, an antioxidant powder is heated and fluidized using hot air. At the same time the coating material is heated until it melts and it is then sprayed onto the fluidized antioxidant powder. The liquid coating material is added to the fluidized antioxidant in an amount sufficient to form coated additive particles having the desired diameter. The core comprising the antioxidant is suitably coated with two or more layers to form the coated particles. Optimum operating conditions for the fluidized bed are shown in Table I. Typically the fluidizing gas employed is an inert gas, air or mixture thereof and is heated to a temperature of from 150°C to 180°C.

Following the completion of the coating step, the coated additive particle is introduced into the polymerization reactor for incorporation into the polymer. The polymerization reactor is typically a gas phase polymerization reactor, a liquid pool polymerization reactor, a solvent/slurry polymerization reactor or a solution polymerization reactor. This incorporation typically takes place without any additional solvents or diluents.

For gas phase fluidized bed polymerization of the olefin, the coated additive particles are suitably introduced into the fluidized zone of monomer in the reactor. Depending on the particular antioxidant, the amounts to be incorporated into the polymer are varied in accordance with the percentages known to the art to achieve the desired polymer properties.

In addition to coated additive and monomer, a catalyst system comprising cocatalyst, selectivity control agent and procatalyst is typically added to the polymerization reactor. The coated particles are suitable for use in all types of polymerization, such as liquid pool polymerization, gas phase polymerization, solvent slurry polymerization, and polymerization processes disclosed in US-A-4,414,132 and US-A-4,329,253. Sieved fractions of the coated additives can also be added to the polymerization reactor.

Good results are obtained with polypropylene wax coatings on solid antioxidants, for incorporation into polypropylene. The wax coating serves to prevent early or inadvertent deactivation of the catalyst by the antioxidant underlying the coating. One important advantage of this occurs in further melt processing of the polymer by the customer, in that, in the extruder, the frictional or applied heat causes the wax coating to melt and thereby promotes dispersion of the additive throughout the resin. Since the polypropylene wax is predominantly isotactic, it can be left in the final product.

From 5 to 85% by weight of antioxidant (based on the total weight of the particle) is typically used in coated particles for stabilizing a polyolefin. Tests have been conducted on a number of different kinds of antioxidants (coated with polypropylene wax), including "Irganox" 3114 ("Irganox" is a Registered Trade Mark), an additive for polymers and particularly useful as a stabilizer for polypropylene compositions.

The novel wax-coated additives can reduce abrasion of the surfaces of processing machinery, and thereby reduce undue wear and erosion of metal surfaces in contact with the final resin composition (including the working parts of the processing equipment). Screw and barrel cleaning presents problems in these types of operations. Metal contamination caused by abrasion is a serious source of discoloration and degradation of the resins and the use of the novel coating additive particles reduces the magnitude of this problem.

Wax-coated antioxidants can minimize the dusting tendencies of the finely divided antioxidants, and thereby prevent the generation of toxic dusts and minimize dust explosion hazards.

The coated additive particles are advantageously used in polymers such as polypropylene, chlorosulfonate polyethylene, ethylene-propylene copolymer rubbers, ethylene-propylene terpolymers, (and butyl, butadiene-styrene, silicone, acrylonitrile rubbers. They are also suitable for use in plastics such as polyvinyl chloride polymers and copolymers, polyethylene and copolymers, polypropylene, polyvinylidene chloride, polystyrene, polyimides, polyamides, polyacetals, acrylonitrile-butadiene-styrene, polycarbonates, polycaprolacetone, poly(ethylene oxide), chlorinated polyethylene, polymethyl methacrylate, and polyaromatic sulfones.

The process of the present invention can be advantageously employed to produce efficiently a resin containing dispersed antioxidants without the need for further extrusion pelletization of the resin. This means that polymerization to produce a highly stable product can be accomplished with an expenditure of a minimum of man-hours and minimal equipment costs compared with known techniques.

The production of concentrates or masterbatches of stabilizer, pigments and other additives is an important segment of the polymer industry. Before fabrication the concentrates (containing additive) are blended with an amount of polymer, to achieve a desired final additive concentration. Additive concentration in the masterbatch can be controlled by controlling the coating layer thickness. The current concentrate manufacturing technology involves extrusion (often with expensive twin-screw equipment) or other mechanical mixing process. Screw and barrel cleaning, maintenance problems, energy cost, heat sensitivity of some additives and pelletization often present problems in such operations. The present invention presents a lower energy, non-extrusion route to additive or pigment concentrate preparation.

The invention is further illustrated by the following Examples, in which all parts and percentages are by weight unless otherwise specified.

### Examples 1 to 3 and Comparative Examples 1

### Preparation of Additive mixtures

The additives used were "Irganox" 3114 (available from Ciba-Geigy Corporation), "Ultranox" 626 (available from Borg Warner Chemicals), and ZnO ("Kadox" 25) (available from New Jersey Zinc Company). ("Ultranox" and "Kadox" are Registered Trade Marks).

Two stabilizer mixtures were prepared. Mixtures 126-1 and 126-2 (same composition) contained "Irganox" 3114, "Ultranox" 626 and zinc oxide in the weight ratio 10:5:4. Mixture 126-5 contained "Irganox" 3114 and ZnO in the weight ratio 10:4. These mixtures were prepared by dry blending the solid stabilizer particles.

### Coating of additives

Fluidized bed coating experiments were conducted at Coating Place Incorporated (Verona, Wisconsin), using the Wurster process, described in H.S. Hall and R. E. Pondell, Chapter 7, in "Controlled Release Technologies: Methods, Theory and Applications", Vol. II, A.F. Kydonieus, Ed. CRC Press, Boca Raton, FL, 1980. In this process the coating material is sprayed or atomized through a nozzle onto a fluidized bed of solid core material.

A fluidized bed equipped with a spray nozzle in the bottom of the reactor was used to prepare the coated particles. The coating wax, which was Hoechst Wax PP 230, which is predominantly isotactic polypropylene with weight average molecular weight of about 25000 and softening point (Ring and Ball) of about 158°C, was delivered to the fluidized additive bed with a Zenith gear pump.

The coating chamber was 10cm (4 inches) in diameter at the bottom and 15cm (6 inches) at the top. The spray nozzle was mounted at the base of this chamber. The molten polypropylene wax was delivered by a heated Zenith gear pump (1.75 cc/revolution) to the spray nozzle. Here the atomizing air produced a fine spray of the polypropylene wax which coated the stabilizer particles in the fluid bed. The operating conditions were as set out in Table I.

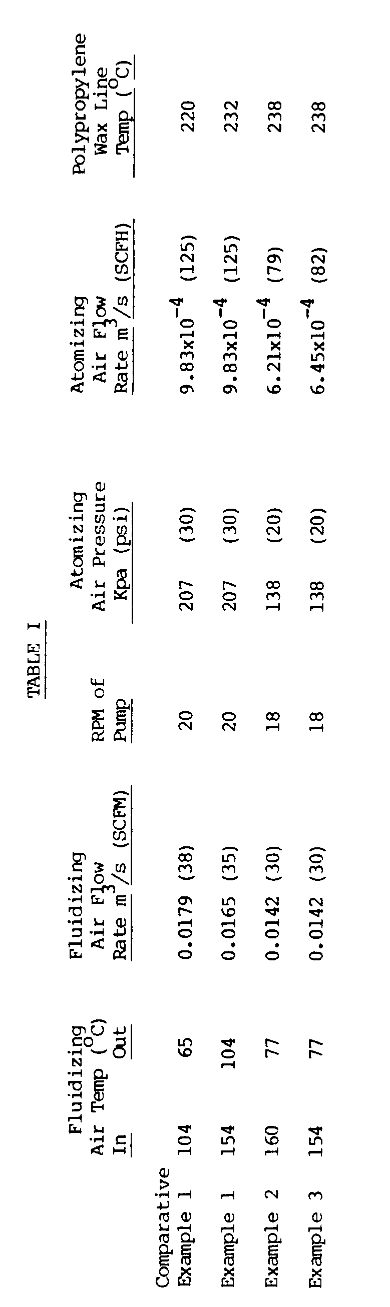

In comparative Example 1, 456 g stabilizer mixture 126-1 was fluidized by air, with the objective of coating it with polypropylene wax. The coating was not successful, because the polypropylene wax formed fiber after exiting the nozzle, instead of atomizing. The fiber formation was caused by the relatively low inlet temperature of the fluidizing air (104°C).

In Example 1 500 g stabilizer mixture 126-2 was coated with 504 g polypropylene wax at a fluidizing air inlet temperature of 184°C during a 24 minute run. The coated particles, which contained 50% weight stabilizer, showed visibly larger particle size than the starting stabilizers.

In Example 2 1 kg stabilizer mixture 126-5 was coated with 200 g polypropylene wax at a fluidizing air inlet temperature of 160°C during a 14 minute run. The coated particles contained 83% by weight of stabilizer.

In Example 3 1 kg of the coated product from Example 2 was further coated with 200 g polypropylene wax at a fluidizing air inlet temperature of 154°C during a 14 minute run. The coated particles contained 69% by weight stabilizer.

### Examples 4 to 8 and Comparative Example 2

### Polymerisation

Batch liquid propylene polymerizations were r un in a 3dm³ (1 U.S. gallon) autoclave (2.7 liter propylene charge) at 67% for one hour using SHAC 201 catalyst. The following injections were made sequentially to the reactor containing propylene and hydrogen: (1) mixture of triethyl aluminum (TEA) cocatalyst (see Table II) and diphenyl dimethoxy silane selectivity control agent (40 microliter), (2) "SHAC" 201 catalyst (0.4 ml in mineral oil), available through the Shell Chemical Co., Houston, Texas ("SHAC" is a Registered Trade Mark) and (3) coated additive suspended in mineral oil (except in the case of comparative Example 2). SHAC 201 catalyst is obtained by halogenating a magnesium compound of the formula MGR′R˝ (wherein R′ is an alkoxide or aryloxide group or halogen, and R˝ is an alkoxide, alkyl carbonate, aryloxide or halogen) with a halide of tetravalent titanium and an electron donor, contacting the halogenated product with a tetravalent titanium halide, washing it to remove unreacted titanium and electron donor, contacting the halogenated product with a tetravalent titanium halide, washing it in an inert solvent to remove unreacted titanium compounds and recovering the solid product.

Xylene solubles (XS) of the resultant polymers were determined as the percentage of material remaining soluble, when cooling a solution of polymer in xylene, from its boiling point to room temperature.

Thermo-oxidative stability of the polypropylene product was determined by both oven aging and oxidative induction time (OIT) measurements. The polypropylene produced in the reactor was compression-molded into 0.25mm (10 mil) thick specimens. For oven aging these 25.4cm x 38.1cm (1-inch X 1.5-inch) speciments were placed in a forced circulation hot air oven maintained at 125±0.1°C. The aging procedure followed the guidelines of ASTM D3012. The samples were inspected daily, and failure was indicated by characteristic powdery disintegration and brittleness of the polymer.

For OIT measurement, about 5 mg of the compression-molded sample was crimped in a Difference Scanning Calorimeter (Perkin-Elmer model DSC-2). The sample was heated to the test temperature under nitrogen, and then the nitrogen gas was replaced by oxygen. From this time (t=0) onward, scanning was done in the time mode. A tangent was drawn to the exothermic oxidation peak; the intersection of this tangent with the initial baseline, measured from t=0, gave the oxidative induction time or 0IT. Note that higher oven life or OIT values indicate greater oxidative stability of the polymer. Polypropylene stability test results are given in Table II which follows:

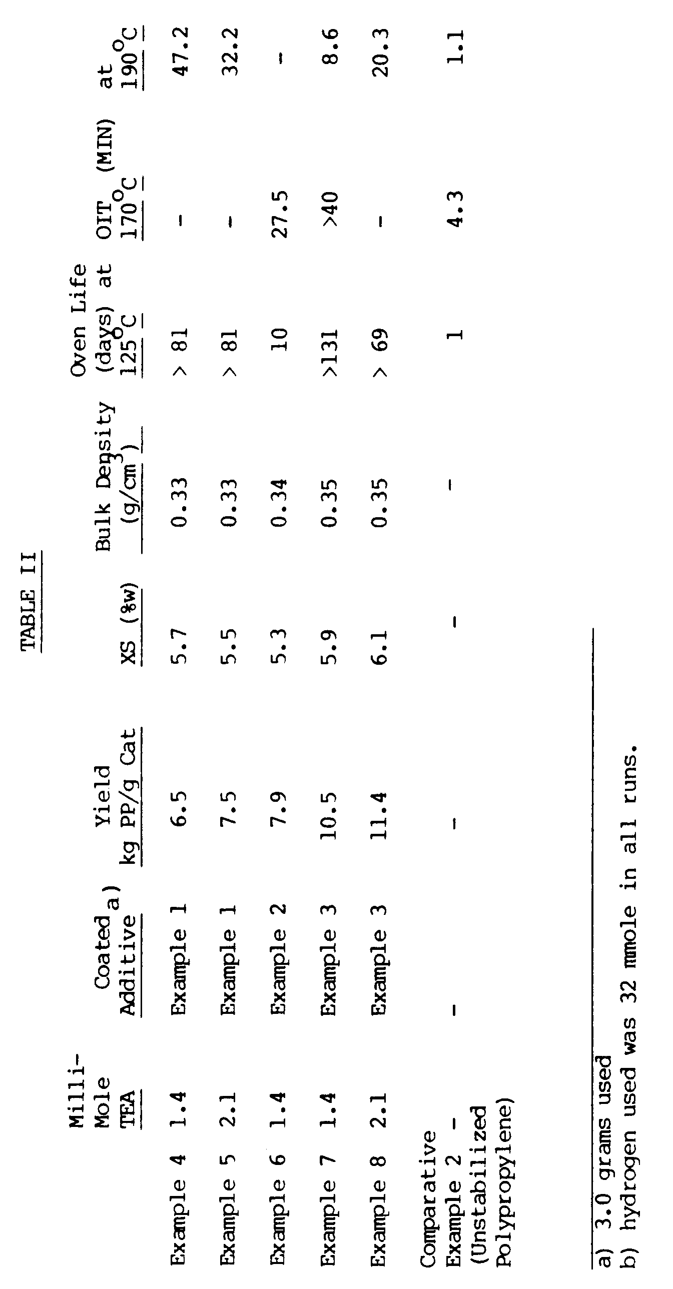

The data in Table II show that the polypropylene produced in the reactor in accordance with the invention (Examples 4 to 8) had good yield and stereoselectivity, and also had significant level of thermo-oxidative stability, as shown by both oven aging and oxidative induction time (OIT) of the polypropylene, compared to polypropylene which was polymerized without the novel particles (Comparative Example 2). Polypropylene yield increased with increasing TEA concentration. The bulk density of the polypropylene was higher than conventional polypropylene powder.

### Comparative Example 3

The process according to Example 4 was carried out, but with the coated additive particles replaced by Irganox 3114 and Zn0 added directly to the reactor.

No polymer was produced owing to the fact that the additives deactivated the catalyst and stopped polymerisation.

Concentrates suitable for polyethylene (PE) resins can be prepared in a similar manner to Examples 4 to 8 by fluidized bed coating of additive or pigment by substituting a PE wax for the PP wax.

## Claims

1. A process for producing a coated additive particle suitable for use in an olefin polymerization reaction, which particle comprises a core comprising at least one antioxidant for a polyolefin, and a coating comprising at least one wax which is solid at the polymerization temperature and which comprises a polyolefin wax selected from polypropylene wax, polybutene-1 wax, polyethylene wax, and a mixture of at least two of these, the process comprising melting a said wax, fluidizing with a hot gas particles of said antioxidant, spraying the molten wax on the heated fluidized antioxidant particles, and maintaining the fluidized antioxidant particles at a temperature such that the formation of fibres is prevented and discrete coated additive particles are formed; and, optionally, repeating these steps to dispose a second coating on the particle.

2. A process according to claim 1 wherein the fluidising gas is an inert gas, air or mixture thereof and is heated to a temperature from 150°C to 180°C.

3. A process according to claim 1 or 2, wherein the coating which is formed represents from 15% to 85% of the total weight of the particle.

4. A process according to any one of claims 1 to 3 wherein the antioxidant used is selected from 1,3,5-trimethyl-2,4,6-tris(3,5-di-tert-butyl-4-hydroxy-benzyl)benzene; octadecyl 3-(3',5'-di-tert-butyl-4'-hydroxyphenyl)propionate; tetrakis[methylene (3,5-di-tert-butyl-4-hydroxyhydrocinnamate)] methane; tris[3,5-di-t-butyl-4-hydroxybenzyl)isocyanurate; 3,5-di-tert-butyl-4-hydroxyhydrocinnamic acid triester with 1,3,5-tris(2-hydroxyethyl)-s-triazine-2,4,6(1H,3H,5H)-trione; (1,3,5-tris(4-tert-butyl-3-hydroxy-2,6-dimethylbenzyl) 1,3,5-triazine-2,4,6-(1H,3H,5H)-trione; bis-[3,3-bis(4'hydroxy-3'tert-butyl-phenyl)-butanoic acid]-glycolester; 2,2'-methylene-bis-(4-methyl-6-tertiary-butyl-phenol)-terephthalate; 2,2-bis[4-(2-(3,5-di-tert-butyl-4-hydroxy-hydrocinnamoyloxy))ethoxy-phenyl]propane; calcium bis[monoethyl(3,5-di-tert-butyl-4-hydroxybenzyl)-phosphonate]; 1,2-bis(3,5-di-tert-butyl-4-hydroxyhydrocinnamoyl) hydrazine; and 2,2'-oxamidobis-[ethyl 3-(3,5-di-tert-butyl-4-hydroxyphenyl)propionate]; and wherein there is an optional further additive selected from an antioxidant, processing stabiliser, acid acceptor, metal deactivating agent, pigment, heat stabilizer, light stabilizer, lubricant, antiblock agent, antistatic agent, slip additive, nucleating agent, filler and flame retardant.

5. A process according to any one of the preceding claims wherein the particle produced has a diameter of from 100 to 8000 µm.

6. A process according to any one of the preceding claims which comprises melting the wax at a temperature of from 110°C to 180°C.

7. A process for providing in-reactor stabilization of a polyolefin during a polymerisation reaction characterised in that it comprises polymerising an olefin in the presence of coated additive particles prepared by the process claimed in any one of claims 1 to 4, and a polymerisation catalyst.

8. A process according to claim 7 wherein the polymerisation reactor is a gas phase polymerisation reactor, a liquid pool polymerisation reactor, a solvent/slurry polymerisation reactor or a solution polymerisation reactor.

## Patentansprüche

1. Verfahren zur Herstellung eine beschichteten Additiv-Teilchens, das zur Verwendung in einer Olefinpolymerisationsreaktion geeignet ist, welches Teilchen einen Kern, umfassend mindestens ein Antioxidans für ein Polyolefin, und einen Überzug, umfassend mindestens ein Wachs, welches bei der Polymerisationstemperatur fest ist und welches ein aus Polypropylen-Wachs, Polybuten-1-Wachs, Polyethylen-Wachs ausgewähltes Polyolefin-Wachs und eine Mischung von mindestens zwei dieser Wachse beinhaltet, umfaßt, wobei das Verfahren das Schmelzen eines der Wachse, Fluidifizieren mit heißem Gas von Teilchen des Antioxidans, Sprühen des geschmolzenen Wachses auf die erwärmten fluidifizierten Antioxidansteilchen und Halten der fluidifizierten Antioxidansteilchen bei einer Temperatur, daß die Bildung von Fasern verhindert und diskrete beschichtete Additiv-Teilchen gebildet werden, und gegebenenfalls das Wiederholen dieser Schritte zur Abscheidung eines zweiten Überzugs auf dem Teilchen umfaßt.

2. Verfahren nach Anspruch 1, worin das fluidifizierende Gas ein inertes Gas, Luft oder eine Mischung hiervon ist und es auf eine Temperatur von 150°C bis 180°C erhitzt wird.

3. Verfahren nach Anspruch 1 oder 2, worin der gebildete Überzug 15 % bis 85 % des Gesamtgewichtes des Teilchens ausmacht.

4. Verfahren nach mindestens einem der Ansprüche 1 bis 3, worin das verwendete Antioxidans aus 1,3,5-Trimethyl-2,4,6-tris(3,5-di-tert-butyl-4-hydroxy-benzyl)benzol; Octadecyl-3-(3',5'-di-tert-butyl-4'-hydroxyphenyl)propionat; Tetrakis-[methylen-(3,5-di-tert-butyl-4-hydroxyhydrocinnamat)]methan; Tris[3,5-di-t-butyl-4-hydroxybenzyl)isocyanurat; 3,5-Di-tert-butyl-4-hydroxyhydrozimtsäuretriester mit 1,3,5-Tris(2-hydroxyethyl)-s-triazin-2,4,6(1H,3H,5H)-trion; (1,3,5-Tris(4-tert-butyl-3-hydroxy-2,6-dimethylbenzyl)-1,3,5-triazin-2,4,6-(1H,3H,5H)-trion; Bis-[3,3-bis(4'-hydroxy-3'-tert-butyl-phenyl)-butansäure]-glycolester; 2,2'-Methylen-bis-(4-methyl-6-tert.-butyl-phenol)-terephtalat; 2,2-Bis[4-(2-(3,5-di-tert-butyl-4-hydroxy-hydrocinnamoyloxy))ethoxy-phenyl]propan; Calcium-bis[monoethyl(3,5-di-tert-butyl-4-hydroxybenzyl)-phosponat]; 1,2-Bis(3,5-di-tert-butyl-4-hydroxyhydrocinnamoyl)hydrazin: und 2,2'-Oxamidobis-[ethyl-3-(3,5-di-tert-butyl-4-hydroxyphenyl)propionat] gewählt ist; und worin ein wahlfreies weiteres Additiv aus einem Antioxidans, Prozeßstabilisator, Säureakzeptor, Metalldeaktivierenden Mittel, Pigment, Wärmestabilisator, Lichtstabilisator, Schmiermittel, Mittel gegen Blocken. Antistatik-Mittel, Slip-Additiv, Keimbildner, Füllstoff und Flammhemmstoff ausgewählt wird.

5. Verfahren nach mindestens einem der vorhergehenden Ansprüche, worin das hergestellte Teilchen einen Durchmesser von 100 bis 8000 µm besitzt.

6. Verfahren nach mindestens einem der vorhergehenden Ansprüche, umfassend das Schmelzen des Wachses bei einer Temperatur von 110° bis 180°C.

7. Verfahren zur Bereitstellung von Stabilisierung eines Polyolefins im Reaktor während einer Polymerisationsreaktion, **dadurch charakterisiert**, daß es die Polymerisation eines Olefins in Gegenwart von beschichteten Additiv-Teilchen, hergestellt nach einem in den Ansprüchen 1 bis 4 beanspruchten Verfahren, und eines Polymerisationskatalysators umfaßt.

8. Verfahren nach Anspruch 7, worin der Polymerisationsreaktor ein Gasphasen-Polymerisationsreaktor, ein Flüssigbad-Polymerisationsreaktor, ein Lösungsmittel/Suspensions-Polymerisatiorsreaktor oder ein Lösungs-Polymerisationsreaktor ist.

## Revendications

1. Procédé de préparation d'une particule d'additifs enrobée pouvant être utilisée dans une réaction de polymérisation d'oléfines, laquelle particule comporte un noyau contenant au moins un agent antioxydant pour polyoléfines et une enveloppe contenant au moins une cire qui est solide à la température de polymérisation et qui est une cire de polyoléfine choisie parmi les cires de polypropylène, poly(butène-1), polyéthylène et un mélange d'au moins deux de ces cires, lequel procédé consiste à faire fondre ladite cire, à fluidiser des particules dudit agent antioxydant à l'aide d'un gaz chaud, à pulvériser la cire fondue sur les particules d'agent antioxydant chauffées et fluidisées et à maintenir les particules d'agent antioxydant fluidisées à une température qui empêche la formation de fibres et permet de former des particules d'additifs enrobées individuellement, et, éventuellement, à répéter ces étapes pour déposer un deuxième revêtement sur la particule.

2. Procédé conforme à la revendication 1 dans lequel le gaz de fluidisation est un gaz inerte, de l'air ou un mélange de ceux-ci, et est chauffé à une température de 150 °C à 180 °C.

3. Procédé conforme à la revendication 1 ou 2 dans lequel le revêtement formé représente de 15 à 85 % du poids total de la particule.

4. Procédé conforme à une quelconque des revendications 1 à 3, dans lequel l'agent antioxydant utilisé est choisi parmi le 1,3,5-triméthyl-2,4,6-tris-(3,5-di-*t*-butyl-4-hydroxybenzyl)-benzène, l'octadécyl-3-(3',5'-di-*t*-butyl-4'-hydroxyphényl)-propionate, le tétrakis-[méthylène(3,5-di-*t*-butyl-4-hydroxyhydrocinnamate)]méthane, le tris-[3,5-di-*t*-butyl-4-hydroxybenzyl)-isocyanurate, le triester de l'acide 3,5-di-*t*-butyl-4-hydroxyhydrocinnamique et de la 1,3,5-tris-(2-hydroxyéthyl)-s-triazine-2,4,6-(1H,3H,5H)-trione, la (1,3,5-tris-(4-*t*-butyl-3-hydroxy-2,6-diméthylbenzyl)-1,3,5-triazine-2,4,6-(1H,3H,5H)-trione, l'ester de l'acide bis-[3,3-(4'-hydroxy-3'-*t*-butylphényl)-butanoïque et de glycol, le téréphtalate de 2,2'-méthylène-bis-(4-méthyl-6-*t*-butylphényle), le 2,2-bis-[4-(2-(3,5-di-*t*-butyl-4-hydroxyhydrocinnamoyloxy))éthoxyphényl]-propane, le bis-[monoéthyl-(3,5-di-*t*-butyl-4-hydroxybenzyl)-phosphonate de calcium, la 1,2-bis-(3,5-di-*t*-butyl-4-hydroxyhydrocinnamoyl)-hydrazine et le 2,2'-oxamido-bis-[propionate d'éthyl-3-(3,5-di-*t*-butyl-4-hydroxyphényle), et qui utilise facultativement un autre additif choisi parmi les antioxydants, les stabilisateurs de mise en oeuvre, les accepteurs d'acide, les agents désactivants les métaux, les pigments, les agents augmentant la stabilité à la chaleur et à la lumière, les lubrifiants, les agents anti-blocking, les agents antistatiques, les additifs de démoulage, les agents de nucléation, les charges et les agents ingnifuges.

5. Procédé conforme à une quelconque des revendications précédentes dans lequel la particule fabriquée a un diamètre compris entre 100 et 8000 µm.

6. Procédé conforme à une quelconque des revendications précédentes qui comprend l'étape de fusion de la cire à une température comprise entre 110°C et 180°C.

7. Procédé permettant une stabilisation dans le réacteur d'une polyoléfine pendant la réaction de polymérisation, caractérisé en ce qu'il consiste à polymériser une oléfine en présence de particules d'additifs enrobées préparées selon le procédé revendiqué dans une quelconque des revendications 1 à 4, et en présence d'un catalyseur de polymérisation.

8. Procédé conforme à la revendication 7 dans lequel le réacteur de polymérisation est un réacteur de polymérisation en phase gazeuse, un réacteur de polymérisation en phase liquide, un réacteur de polymérisation en suspension ou un réacteur de polymérisation en solution.
